# EUROPÄISCHE PATENTANMELDUNG

(11) **EP 3 342 674 A1**
(43) Veröffentlichungstag der Anmeldung: **04.07.2018**
(21) Anmeldenummer: 17207755.4
(22) Anmeldetag: 15.12.2017
(51) Int. Cl.: B62B 3/00, B62B 5/00

(54) **ABDECKMITTEL UND WAGEN MIT ABDECKMITTEL**

(30) Priorität: 27.12.2016 DE 102016125716; 02.06.2017 DE 102017112207
(71) Anmelder: Manfred Eberle KG, 88287 Grünkraut (DE)
(72) Erfinder: Eberle, Jürgen, 88285 Bodnegg (DE)
(74) Vertreter: Otten, Roth, Dobler & Partner mbB Patentanwälte

(57) **Zusammenfassung**

Es wird ein Wagen 1, insbesondere Rollcontainer, zum Lagern und Transportieren von Gütern, insbesondere Lebensmittel vorgeschlagen, wobei der Wagen 1 ein Rollgestell 2 und ein Abdeckmittel 3 umfasst, wobei das Rollgestell 2 ein Basisteil 4 zum Auflegen von Gütern umfasst, wobei das Basisteil 4 Rollmittel 5, 5', 5", 5''' umfasst, wobei das Rollgestell 2 wenigstens zwei vertikale und sich gegenüberliegend angeordnete Seitenwände 6, 6' umfasst, die jeweils ein oberes Ende 7, 7' und ein unteres Ende 8, 8' umfassen und die jeweils mit dem unteren Ende 8, 8' mit dem Basisteil 4 verbunden sind. Es ist vorgesehen, dass das Abdeckmittel 3 eine umlaufende, einstückige Plane 9, Verschlussmittel 10, 10', 10", 10''' und Hängemittel 11, 11' umfasst, wobei die Verschlussmittel 10, 10', 10", 10''' und die Hängemittel 11, 11' mit der Plane 9 verbunden sind.

## Beschreibung

Die Erfindung betrifft einen Wagen, insbesondere Rollcontainer, zum Lagern und Transportieren von Gütern, insbesondere Lebensmittel, nach dem Oberbegriff des Anspruchs 1 sowie ein Abdeckmittel für einen Wagen nach Anspruch 14.

Wagen zum Transport von Gütern sind aus dem Stand der Technik hinlänglich bekannt. So kennt man beispielsweise aus der EP 0 732 249 B1 einen Wagen, der als Vorrichtung zum Transportieren und Schützen insbesondere von Pflanzen vorgesehen ist.

Um wirtschaftliche Schäden durch Beschädigung von Gütern während eines Transportes auf solchen Wagen zu vermeiden, ist es ggf. vorgesehen, Güter bei Transport entsprechend zu schützen. Dies kann beispielsweise bedeuten, dass Güter gegen ein unbeabsichtigtes Herausfallen aus Wagen geschützt werden müssen.

Aufgabe der Erfindung ist es daher, eine Vorrichtung bereitzustellen, mittels der Güter möglichst beschädigungsfrei transportiert werden können, d.h. dass Beschädigungen der Güter während des Transports zumindest reduziert werden können. Somit es auch Aufgabe der Erfindung, erhöhte Transportsicherheiten zu transportierender Güter bereitzustellen.

Zur Lösung der Aufgabe wird ein Wagen, insbesondere Rollcontainer, zum Lagern und Transportieren von Gütern, insbesondere Lebensmittel, vorgeschlagen, wobei der Wagen ein Rollgestell und ein Abdeckmittel umfasst, wobei das Rollgestell ein Basisteil zum Auflegen von Gütern umfasst", wobei das Basisteil Rollmittel umfasst, wobei das Rollgestell wenigstens zwei vertikale und sich gegenüberliegend angeordnete Seitenwände umfasst, die jeweils ein oberes Ende und ein unteres Ende umfassen und die jeweils mit dem unteren Ende mit dem Basisteil verbunden sind.

Erfindungsgemäß ist vorgesehen, dass das Abdeckmittel eine umlaufende, einstückige Plane, Verschlussmittel und Hängemittel umfasst, wobei die Verschlussmittel und die Hängemittel mit der Plane verbunden sind.

Ein derartig ausgestaltetes Abdeckmittel ist auf besonders einfache, sichere und zuverlässige Weise an einem derartigen Wagen anbringbar, so dass auf einem derartigen Wagen zu transportierende Güter vor Schäden beim Transport geschützt werden können. Insbesondere ist zumindest gewährleistet, dass Güter beim Transport mittels derartigen Wagen nicht herausfallen und somit beschädigt werden können.

Verschlussmittel ermöglichen ein Verschließen der Plane und somit ein Ummanteln des Wagens, so dass Güter nicht unbeabsichtigt den Wagen verlassen können. Haltemittel erhöhen zudem die Befestigung der Plane am Wagen und tragen somit zu einer erhöhten Transportsicherheit bei.

In besonders vorteilhafter Weise kann die Plane somit am Wagen einfach und sicher befestigt und bei Bedarf wieder entfernt werden. Unbeabsichtigtes Lösen der Plane wird unterbunden. Somit wird die Transportsicherheit für Güter signifikant erhöht.

In einer vorteilhaften Weiterbildung kann vorgesehen sein, dass wenigstens eines der Verschlussmittel als Klettverschluss ausgebildet ist und/oder dass wenigstens eines der Hängemittel jeweils als Klettverschluss ausgebildet ist und/oder das wenigstens eines der Hängemittel als vorzugsweise verstellbarer Schnappverschluss ausgebildet ist.

Dies stellt eine besonders einfache Möglichkeit dar, die Plane zu verschließen und somit die Transportsicherheit für Güter zu erhöhen. Klettverschlüsse sind zudem sehr robust und langlebig sowie kostengünstig. Ein Hängemittel, welches als Schnappverschluss ausgebildet ist, ist einfach montierbar bzw. demontierbar und gleichermaßen praktikabel handhabbar wie kostengünstig. Zudem kann ein Schnappverschluss ein sicheres Befestigen bzw. halten der Plane ermöglichen und somit einen wesentlichen Beitrag zur Erhöhung der Transportsicherheit leisten.

Eine weitere vorteilhafte Ausgestaltung kann vorsehen, dass die Verschlussmittel und die Plane sowie die Hängemittel und die Plane einstückig ausgebildet und vorzugsweise die Plane und die Verschlussmittel bzw. die Hängemittel aus unterschiedlichen Materialien gefertigt sind.

Somit kann die Stabilität des Abdeckmittels in einem befestigten Zustand insgesamt erhöht werden. Zudem kann eine gleichbleibende Funktionalität des Abdeckmittels gewährleistet werden, da Verschlussmittel und Hängemittel stets an der Plane angeordnet sind. Ein derartiges Abdeckmittel ist somit als sehr zuverlässig zu betrachten.

Möglich ist auch, dass die Plane aus einem formstabilen Material besteht und/oder dass die Plane aus einem textilen Gewebe besteht und/oder dass die Plane aus Kunststoff besteht.

Somit kann auf unterschiedliche Anforderungen an die Plane eingegangen werden, wobei Wasserdichtheit und Schutz vor UV-Strahlung beispielhaft aufgeführt werden können.

Weiterhin kann vorgesehen sein, dass wenigstens zwei der Hängemittel derart an der Plane angeordnet sind, dass bei einem Ummanteln des Rollgestells wenigstens eines der Hängemittel mit dem oberen Ende und insbesondere einem oberen Querholm der linken Seitenwand verbindbar ist und dass wenigstens eines der Hängemittel mit dem oberen Ende und insbesondere einem oberen Querholm der rechten Seitenwand verbindbar ist.

Auf diese Weise wird eine erhöhte Transportsicherheit für Güter bereitgestellt, da die Plane nach einem Ummanteln des Rollgestells bzw. des Wagens zusätzlich mittels Hängemitteln mit Seitenwänden des Rollgestells befestigt wird und ein Abgleiten der Plane in Richtung Boden unterbunden wird.

Die Erfindung kann auch vorsehen, dass das Basisteil und/oder das Abdeckmittel Befestigungsmittel umfassen, durch welche das Abdeckmittel mit dem Basisteil verbindbar ist.

Auf diese Weise kann die Plane zusätzlich mit dem Basisteil verbunden werden, so dass eine weitere Befestigung der Plane mit dem Wagen insgesamt bereitgestellt werden kann. Dies kann die Transportsicherheit weiter erhöhen.

In einer vorteilhaften Weiterbildung kann vorgesehen sein, dass die Plane als flächiger Zuschnitt ausgebildet ist und eine Länge aufweist, die im Wesentlichen einem 1,05-fachen bis 1,35-fachen und insbesondere etwa einem 1,07-fachen des Umfangs des Basisteils des Rollgestells entspricht.

Durch einen derartigen Überlapp der Plane wird ein sicheres Verschließen der Plane mittels Verschlussmitteln ermöglicht und zudem ermöglicht, dass die Plane spannungsfrei vollständig umlaufend anordenbar und verschließbar ist.

In einer bevorzugten Weiterbildung kann vorgesehen sein, dass die Plane als flächiger Zuschnitt ausgebildet ist und eine Breite aufweist, die gleich und insbesondere kleiner als eine von einer Auflagefläche des Basisteils aus in vertikaler Richtung gemessene Höhe wenigstens einer der Seitenwände ist.

Somit wird je ein Bereich an einem oberen Ende der Seitenwand nicht ummantelt und bleibt somit frei. Dadurch kann die Plane an diesem freibleibenden Bereich befestigt werden. Damit wird eine Transportsicherheit durch eine derartig angebrachte Plane an einem Wagen bzw. einer Seitenwand, etc. erhöht.

In einer weiteren Ausgestaltung kann vorgesehen sein, dass die Verschlussmittel jeweils wenigstens zwei Verbindungsmittel umfassen und dass an der Plane in einem zwischen einer unteren Längskante und einer oberen Längskante verlaufenden linken Kantenbereich zwei, vorzugsweise drei und besonders bevorzugt vier erste Verbindungsmittel der Verschlussmitteln angeordnet sind, wobei diese Verbindungsmittel jeweils gegenüberliegend an einem dem linken Kantenbereich gegenüberliegenden rechten Kantenbereich der Plane mit in entsprechender Zahl angeordneten zweiten Verbindungsmitteln zur umlaufenden Ummantelung eines durch die Seitenwände begrenzten quaderähnlichen Stauraums des Rollgestells verbindbar sind.

Auf diese Weise kann eine besonders sichere Befestigung der Plane an dem Wagen bereitgestellt werden, so dass eine besonders hohe Transportsicherheit bereitgestellt werden kann.

Weiterhin ist es möglich, dass die Plane einen vorzugsweise vollständig umlaufenden verstärkten Randbereich umfasst.

Diese Maßnahme kann Beschädigungen der Plane insbesondere an deren Randbereichen entgegenwirken. Die Plane weist eine entsprechend höhere Stabilität auf. Daraus kann resultieren, dass die Plane eine längere Lebensdauer hat.

Es kann auch vorgesehen sein, dass die Plane wenigstens ein zumindest teilweise umlaufendes Spannmittel umfasst.

Auf diese Weise kann die Plane bzw. das Abdeckmittel zusätzlich mit bzw. an dem Wagen fixiert werden. Dadurch kann die Transportsicherheit weiter erhöht werden.

Es kann auch vorgesehen sein, dass die Plane wenigstens ein vorzugsweise als Tasche ausgebildetes Aufnahmemittel umfasst.

Es kann somit ermöglicht werden, Informationen zu den zu transportierenden Gütern mittels des Aufnahmemittels bereitzustellen insbesondere ohne, dass das Abdeckmittel entfernt bzw. geöffnet werden muss. Dadurch kann auch die Effizienz von Transportvorgängen bzw. Logistikvorgängen erhöht werden.

In einer Weiterbildung kann auch vorgesehen sein, dass die Plane wenigstens einen durchsichtigen Fensterausschnitt umfasst.

Somit kann auf einfache Weise ohne Öffnen bzw. Entfernen des Abdeckmittels bzw. der Plane ermöglicht werden, auf dem Wagen befindliche bzw. zu transportierende Güter zu identifizieren.

In einer weiteren vorteilhaften Ausgestaltung kann die Erfindung vorsehen, dass die Plane wenigstens eine Aussparung, vorzugsweise zwei Aussparungen, insbesondere drei oder vier Aussparungen umfasst, welche wenigstens einen Längsholm, vorzugsweise zwei Längsholme, insbesondere drei oder vier Längsholme zur Betätigung als Schiebe- bzw. Ziehgriff zugänglich machen. Dadurch kann der Wagen ohne Einwirkung auf die Plane, die somit vor Belastungen geschützt wird, besonders einfach bewegt werden.

In einer weiteren vorteilhaften Ausgestaltung kann auch vorgesehen sein, dass die Plane zur Anbringung wenigstens eines Befestigungsmittels, vorzugsweise zwei oder vier Befestigungsmittel, an dem Wagen, im Bereich wenigstens eines Längsholmes, vorzugsweise an zwei Längsholmen oder an vier Längsholmen angeordnete(n) Schlitz(e) oder dergleichen Öffnung(en), insbesondere Aussparung(en) umfasst.

Auf diese Weise kann der Wagen beispielsweise während des Transports, z.B. in einem Lieferwagen, befestigt werden ohne auf die Plane einzuwirken oder diese zu entfernen. Dadurch kann die Plane bei stabiler Befestigung des Wagens vor erhöhten Belastungen bzw. vor Beschädigungen durch das Befestigungsmittel geschützt werden.

Die Erfindung betrifft auch ein Abdeckmittel zum Ummanteln eines Rollgestells, insbesondere eines Wagens, insbesondere eines Rollcontainer, zum Lagern und Transportieren von Gütern, wobei der Wagen ein Rollgestell und das Abdeckmittel umfasst, wobei das Rollgestell ein Basisteil zum Auflegen von Gütern umfasst, wobei das Basisteil Rollmittel umfasst, wobei das Rollgestell wenigstens zwei vertikale und sich gegenüberliegend angeordnete Seitenwände umfasst, die jeweils ein oberes Ende und ein unteres Ende umfassen und die jeweils mit dem unteren Ende mit dem Basisteil verbunden sind.

Erfindungswesentlich ist, dass das Abdeckmittel als umlaufende, einstückige Plane ausgebildet ist und Verschlussmittel zum Verschließen der Plane zu einer Ummantelung und Hängemittel zum Aufhängen der Plane an dem Wagen umfasst.

Auf diese Weise kann eine Transportsicherung für einen derartigen Wagen bereitgestellt werden, die besonders stabil ist und einen besonders hohen Schutz von zu transportierenden Gütern bereitstellen kann.

Im Sinne der Erfindung ist unter einem Wagen insbesondere ein Rollcontainer aufzufassen. Üblicherweise weisen diese Rollcontainer zwischen den Seitenwänden angeordnete Fachböden oder Zwischenböden auf, welche u.a. die Seitenwänden gegeneinander abstützen und den Rollcontainer stabilisieren.

Nachfolgend wird die Erfindung anhand von Zeichnungen näher erläutert. Hierbei zeigt:
- Fig. 1:: eine schematische Darstellung eines aus dem Stand der Technik bekannten Wagens ohne Abdeckmittel;
- Fig. 2:: eine schematische Darstellung eines erfindungsgemäßen Wagens mit einem erfindungsgemäßen Abdeckmittel;
- Fig. 3:: einen vergrößerten Ausschnitt des erfindungsgemäßen Wagens aus Fig. 2;
- Fig. 4:: ein erfindungsgemäßes Abdeckmittel in einer perspektivischen Darstellung;
- Fig. 5:: eine schematische Darstellung einer weiteren Ausführungsform eines erfindungsgemäßen Wagens mit einem erfindungsgemäßen Abdeckmittel.

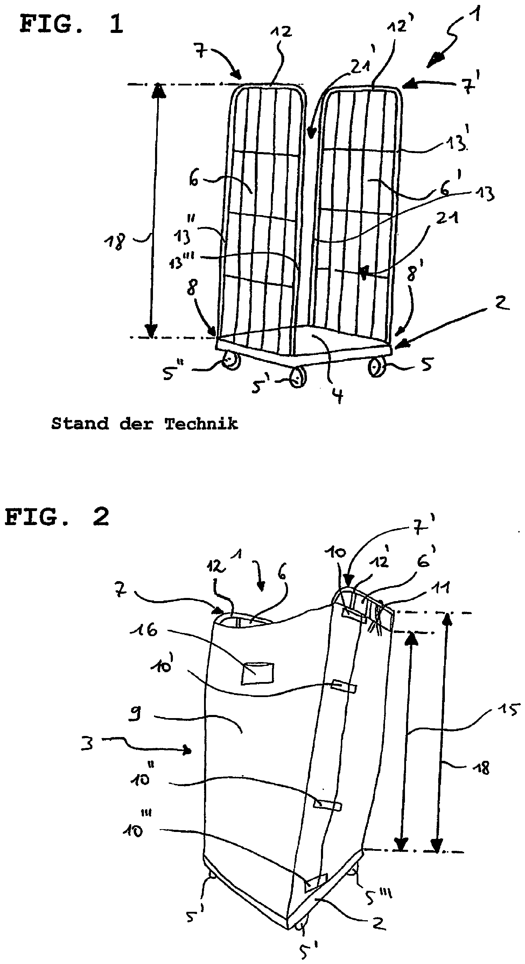

Fig. 1 zeigt einen Rollcontainer, zum Lagern und Transportieren von Gütern (nicht gezeigt), insbesondere Lebensmittel, wie dieser aus dem Stand der Technik bekannt ist. Dieser bekannte Rollcontainer umfasst ein Rollgestell 2, wobei das Rollgestell 2 ein Basisteil 4 zum Auflegen von Gütern (nicht dargestellt) umfasst. Im Sinne der Erfindung ist der dargestellte Rollcontainer als Wagen 1 zu verstehen.

Das Basisteil 4 umfasst Rollmittel 5, 5', 5", mittels denen der Wagen 1 bewegbar ist. Das Rollgestell 2 umfasst weiterhin zwei vertikale und sich gegenüberliegend angeordnete Seitenwände 6, 6', die jeweils ein oberes Ende 7, 7' und ein unteres Ende 8, 8' umfassen und die jeweils mit dem unteren Ende 8, 8' mit dem Basisteil 4 verbunden sind.

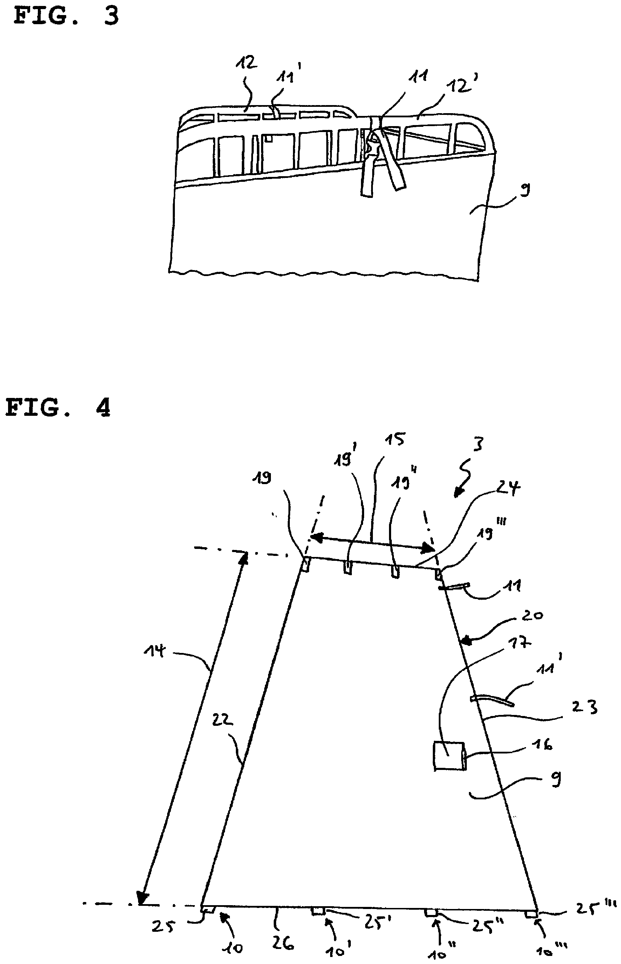

Der gezeigte Wagen 1, der aus dem Stand der Technik wohl bekannt ist, umfasst vorliegend aus Gründen übersichtlicher Darstellung kein Abdeckmittel (siehe z.B. Fig. 2 und Fig. 4).

Die Seitenwände 6, 6' sind vorliegend gitternetzartig ausgebildet und umfassen jeweils Querholme 12, 12' sowie Längsholme 13, 13', 13", 13"', die jeweils auch als jeweilige Eckbereiche des Wagens 1 bzw. der Seitenwände 6, 6' aufgefasst werden können.

Auf den gezeigten Wagen 1 können und werden üblicherweise Güter (nicht dargestellt), z.B. Lebensmittel, gelegt und somit transportiert. Hierbei kann nunmehr die Problematik auftreten, dass solche Güter von dem Wagen 1 fallen können, beispielsweise aus Bereichen, der nicht durch die Seitenwände 6, 6' begrenzt wird. Diese Bereiche können auch als Offenbereiche 21, 21' aufgefasst werden.

Fig. 2 zeigt eine schematische Darstellung eines erfindungsgemäßen Wagens 1 mit einem erfindungsgemäßen Abdeckmittel 3. Das Abdeckmittel 3 umfasst eine Plane 9, Verschlussmittel 10, 10', 10", 10'" und Hängemittel 11, wobei die Verschlussmittel 10, 10', 10", 10''' und Hängemittel 11 mit der Plane 9 verbunden sind. Die Plane 9 ist einstückig und den Wagen 1 umlaufend bzw. die Seitenwände 6, 6' umlaufend ausgebildet.

Die Plane 9 ist um den Wagen 2 umfangsseitig umlegbar und über Ecken (siehe Fig. 1) mittels Verschlussmitteln 10, 10', 10", 10'" verschließbar. Mittels Hängemittel 11 (bzw. 11, siehe Fig. 4) ist die Plane 9 am Wagen 2 befestigbar. So wird der Wagen von der Plane ummantelt und eine Transportsicherung für Güter, die mit dem Wagen 1 transportiert werden, bereitgestellt.

Es ist insbesondere vorgesehen, dass die Plane 9 Verschlussmittel 10, 10', 10", 10'" umfasst, die im Wesentlichen orthogonal zu der Breite 15 der Plane 9 angeordnet sind.

Das Hängemittel 11 ist derart an der Plane 9 angeordnet, dass bei einem Ummanteln des Rollgestells 2 bzw. der Seitenwände 6, 6' bzw. des Wagens 1 das Hängemittel 11 mit dem oberen Ende 7' und insbesondere mit dem Querholm 12' der Seitenwand 6' verbindbar ist. In nicht näher dargestellter Weise umfasst die Plane bevorzugt ein weiteres Hängemittel (siehe z.B. Fig. 4), das mit einem weiteren Querholm verbindbar ist.

Im Ausführungsbeispiel umfasst die Plane 9 ein als Tasche ausgebildetes Aufnahmemittel 16, in welchem Informationen, z.B. bezüglich zu transportierender Güter untergebracht werden können, beispielsweise in Papierform.
Es ist auch dargestellt, dass die Plane 9 die Breite 15 aufweist, die kleiner als eine von einer Auflagefläche des Basisteils (siehe Fig. 1) aus in vertikaler Richtung gemessene Höhe 18 der Seitenwände 6, 6' ist.

Somit ist die Plane 9 in anderen Worten derart an den Seitenwänden 6. 6' angeordnet, dass Bereiche der Seitenwände 6, 6' von der Plane 9 nicht bedeckt werden. Somit wird ermöglicht, dass die Plane 9 mittels Hängemittel 11 mit der Seitenwand 6' verbindbar ist. Dadurch wird ermöglicht, dass die Plane 9 stabil mit dem Wagen 1 verbunden ist. Ein Absenken der Plane 9 wird verhindert.

Somit wird auch ein sicheres Transportieren von Gütern mit dem Wagen 1 ermöglicht, da Güter nicht aus dem Wagen 1 fallen können durch die Ummantelung des Wagens 1 mit der Plane 9 und durch die Befestigung der Plane 9 mit dem Wagen 1.

In Fig. 3 ist ein vergrößerter Ausschnitt des erfindungsgemäßen Wagens mit Abdeckmittel gemäß Fig. 2 gezeigt. Hierbei ist insbesondere ersichtlich, dass Hängemittel 11, 11' als verstellbare Schnappverschlüsse ausgebildet sind. Weiterhin ist gezeigt, dass die Hängemittel 11, 11' mit Querholmen 12, 12' verbunden werden, um eine Befestigung der Plane 9 zu ermöglichen.

In Fig. 4 ist ein erfindungsgemäßes Abdeckmittel 3 dargestellt. Das Abdeckmittel 3 umfasst eine umlaufende einstückige Plane 9, Verschlussmittel 10, 10', 10", 10''' und Hängemittel 11, 11', wobei die Verschlussmittel 10, 10', 10", 10''' und die Hängemittel 11, 11' mit der Plane 9 verbunden sind.

Die Verschlussmittel 10, 10', 10", 10''' sind als Klettverschluss ausgebildet und umfassen jeweils Verbindungsmittel 19, 19', 19", 19"', 25, 25', 25", 25"'.

An der Plane 9 sind in einem zwischen einer unteren Längskante 22 und einer oberen Längskante 23 verlaufenden linken Kantenbereich 24 vier erste Verbindungsmittel 19, 19', 19", 19"' der Verschlussmittel 10, 10', 10", 10"' angeordnet. Diese Verbindungsmittel sind jeweils gegenüberliegend an einem dem linken Kantenbereich 24 gegenüberliegenden rechten Kantenbereich 26 der Plane 9 mit in entsprechender Zahl angeordneten zweiten Verbindungsmitteln 25, 25', 25", 25"' zur umlaufenden Ummantelung eines durch die Seitenwände 6, 6' begrenzten quaderähnlichen Stauraums des Rollgestells 2 verbindbar sind.

Es kann vorgesehen sein, dass die Plane 9 einen verstärkten Randbereich 20 umfasst. Es kann insbesondere vorgesehen sein, dass die Plane 9 einen vollständig umlaufenden verstärkten Randbereich 20 umfasst.

Es kann vorgesehen sein, dass die Plane 9 Aufnahmemittel 16 umfasst. Es kann auch vorgesehen sein, dass die Plane 9 einen durchsichtigen Fensterausschnitt 17 umfasst.

Es kann vorgesehen sein, dass die Plane 9 eine Breite 15 aufweist, die zwischen 1,00 Meter und 1,50 Meter beträgt. Bevorzugt ist, dass die Breite 15 zwischen 1,20 Meter und 1,30 Meter beträgt. Besonders bevorzugt ist, dass die Breite 15 in etwa 1,26 Meter beträgt.

Es kann vorgesehen sein, dass die Plane 9 eine Länge 14 aufweist, die zwischen 2,80 Meter und 3,50 Meter liegt. Besonders bevorzugt ist, dass die Plane eine Länge 14 aufweist, die in etwa 3,20 Meter beträgt.

Somit kann vorgesehen sein, dass die Plane 9, die vorliegend als flächiger Zuschnitt ausgebildet ist, eine Länge 14 aufweist, die im Wesentlichen einem 1,05-fachen bis 1,35-fachen und insbesondere etwa einem 1,07-fachen des Umfangs des Basisteils des Rollgestells entspricht.

Das Abdeckmittel 3 umschließt somit in angebrachtem Zustand den Wagen bzw. das Rollgestell (siehe Fig. 1) vollständig und wird durch die Verschlussmittel 10, 10', 10" und 10''' verschlossen. Dieses Verschließen erfolgt vorzugsweise über Eckbereiche der Seitenwände. Unter Eckbereichen können im Sinne der Erfindung Längsholme aufgefasst werden (siehe Fig. 1) .

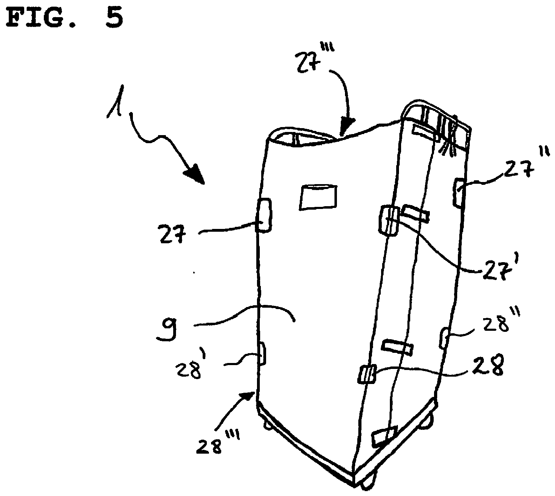

In der Figur 5 ist ein weiteres Ausführungsbeispiel eines Wagens 1 mit Plane 9 schematisch dargestellt. Es ist gezeigt, dass die Plane 9 Aussparungen 27, 27', 27", 27"' (verdeckt) umfasst. Es ist hierbei vorgesehen, dass Längsholme (siehe Figur 1) als Schiebe- bzw. Ziehgriff zugänglich gemacht werden können, wodurch der Wagen 1 ohne Einwirkung auf die Plane 9 besonders einfach geschoben bzw. gezogen werden kann.

Weiterhin ist alternativ oder ergänzend dargestellt, dass die Plane 9 vier Öffnungen 28, 28', 28", 28"' umfasst. Diese können ermöglichen, dass Befestigungsmittel (nicht dargestellt) an den Längsholmen, an welchem die Öffnungen 28, 28', 28", 28''' (verdeckt) angeordnet sind, anbringbar sind. Derartige Befestigungsmittel können z.B. in einem Liefer- oder Lastwagen oder dergleichen (nicht dargestellt) angeordnet sein wodurch eine stabile Befestigung über die Längsholme des Wagens mit einem solchen Liefer- oder Lastwagen erfolgen kann. Hierbei kann die Erfindung selbstverständlich auch vorsehen, dass mehrere Öffnungen in Bereichen der insgesamt vier Längsholme des Wagens (siehe Figur 1) angeordnet sind.

In nicht näher dargestellter Art und Weise kann auch vorgesehen sein, dass die Plane 9 lediglich zwei Öffnungen umfasst.

### Bezugszeichenliste:

- 1: Wagen
- 2: Rollgestell
- 3: Abdeckmittel
- 4: Basisteil
- 5: Rollmittel
- 5': Rollmittel
- 5": Rollmittel
- 5''': Rollmittel
- 6: Seitenwand
- 6': Seitenwand
- 7: Oberes Ende (der Seitenwand 6)
- 7': Oberes Ende (der Seitenwand 6')
- 8: Unteres Ende (der Seitenwand 6)
- 8': Unteres Ende (der Seitenwand 6')
- 9: Plane
- 10: Verschlussmittel
- 10': Verschlussmittel
- 10": Verschlussmittel
- 10''': Verschlussmittel
- 11: Hängemittel
- 11': Hängemittel
- 12: Querholm
- 12': Querholm
- 13: Längsholm
- 13': Längsholm
- 13": Längsholm
- 13''': Längsholm
- 14: Länge (der Plane bzw. des Abdeckmittels)
- 15: Breite (der Plane bzw. des Abdeckmittels)
- 16: Aufnahmemittel
- 17: Fensterausschnitt
- 18: Höhe (der Seitenwände)
- 19: erste Verbindungsmittel
- 19': erste Verbindungsmittel
- 19": erste Verbindungsmittel
- 19''': erste Verbindungsmittel
- 20: Randbereich
- 21: Offenbereich
- 21': Offenbereich
- 22: Untere Längskante
- 23: Obere Längskante
- 24: Linker Kantenbereich
- 25: zweite Verbindungsmittel
- 25': zweite Verbindungsmittel
- 25": zweite Verbindungsmittel
- 25''': zweite Verbindungsmittel
- 26: Rechter Kantenbereich
- 27: Aussparung
- 27': Aussparung
- 27": Aussparung
- 27''': Aussparung
- 28: Öffnung
- 28': Öffnung
- 28": Öffnung
- 28''': Öffnung

## Patentansprüche

1. Wagen (1), insbesondere Rollcontainer, zum Lagern und Transportieren von Gütern, insbesondere Lebensmittel,
- wobei der Wagen (1) ein Rollgestell (2) und ein Abdeckmittel (3) umfasst,
- wobei das Rollgestell (2) ein Basisteil (4) zum Auflegen von Gütern umfasst,
- wobei das Basisteil (4) Rollmittel (5, 5', 5", 5"') umfasst,
- wobei das Rollgestell (2) wenigstens zwei vertikale und sich gegenüberliegend angeordnete Seitenwände (6, 6') umfasst, die jeweils ein oberes Ende (7, 7') und ein unteres Ende (8, 8') umfassen und die jeweils mit dem unteren Ende (8, 8') mit dem Basisteil (4) verbunden sind,
**dadurch gekennzeichnet, dass**
das Abdeckmittel (3) eine umlaufende, einstückige Plane (9), Verschlussmittel (10, 10', 10", 10"') und Hängemittel (11, 11') umfasst, wobei die Verschlussmittel (10, 10', 10", 10''') und die Hängemittel (11, 11') mit der Plane (9) verbunden sind.

2. Wagen nach Anspruch 1, **dadurch gekennzeichnet, dass** wenigstens eines der Verschlussmittel (10, 10', 10", 10"') als Klettverschluss ausgebildet ist und/oder dass wenigstens eines der Hängemittel (11, 11') jeweils als Klettverschluss ausgebildet ist und/oder dass wenigstens eines der Hängemittel (11, 11') als vorzugsweise verstellbarer Schnappverschluss ausgebildet ist.

3. Wagen nach einem der vorangehenden Ansprüche, **dadurch gekennzeichnet, dass** die Verschlussmittel (10, 10', 10", 10"') und die Plane (9) sowie die Hängemittel (11, 11') und die Plane (9) einstückig ausgebildet und vorzugsweise die Plane (9) und die Verschlussmittel (10, 10', 10", 10"') bzw. die Hängemittel (11, 11') aus unterschiedlichen Materialien gefertigt sind.

4. Wagen nach einem der vorangehenden Ansprüche, **dadurch gekennzeichnet, dass** die Plane (9) aus einem formstabilen Material besteht und/oder dass die Plane (9) aus einem textilen Gewebe besteht und/oder dass die Plane (9) aus Kunststoff besteht.

5. Wagen nach einem der vorangehenden Ansprüche, **dadurch gekennzeichnet, dass** wenigstens zwei der Hängemittel (11, 11') derart an der Plane (9) angeordnet sind, dass bei einem Ummanteln des Rollgestells (2) wenigstens eines der Hängemittel (11, 11') mit dem oberen Ende (7, 7') und insbesondere mit einem Querholm (12, 12') einer Seitenwand (6, 6') verbindbar ist.

6. Wagen nach einem der vorangehenden Ansprüche, **dadurch gekennzeichnet, dass** das Basisteil (4) und/oder das Abdeckmittel (3) Befestigungsmittel umfassen, durch welche das Abdeckmittel (3) mit dem Basisteil (4) verbindbar ist.

7. Wagen nach einem der vorangehenden Ansprüche, **dadurch gekennzeichnet, dass** die Plane (9) als flächiger Zuschnitt ausgebildet ist und eine Länge (14) aufweist, die im Wesentlichen einem 1,05-fachen bis 1,35-fachen und insbesondere etwa einem 1,07-fachen des Umfangs des Basisteils (4) des Rollgestells (2) entspricht.

8. Wagen nach einem der vorangehenden Ansprüche, **dadurch gekennzeichnet, dass** die Plane (9) als flächiger Zuschnitt ausgebildet ist und eine Breite (15) aufweist, die gleich und insbesondere kleiner als eine von einer Auflagefläche des Basisteils (4) aus in vertikaler Richtung gemessene Höhe (18) wenigstens einer der Seitenwände (6, 6') ist.

9. Wagen nach einem der vorangehenden Ansprüche, **dadurch gekennzeichnet, dass** die Verschlussmittel (10, 10', 10", 10"') jeweils wenigstens zwei Verbindungsmittel (19, 19', 19", 19"', 25, 25', 25", 25"') umfassen und dass an der Plane (9) in einem zwischen einer unteren Längskante (22) und einer oberen Längskante (23) verlaufenden linken Kantenbereich (24) zwei, vorzugsweise drei und besonders bevorzugt vier erste Verbindungsmittel (19, 19', 19", 19"') der Verschlussmittel (10, 10', 10'', 10''') angeordnet sind, wobei diese Verbindungsmittel jeweils gegenüberliegend an einem dem linken Kantenbereich (24) gegenüberliegenden rechten Kantenbereich (26) der Plane (9) mit in entsprechender Zahl angeordneten zweiten Verbindungsmitteln (25, 25', 25", 25''') zur umlaufenden Ummantelung eines durch die Seitenwände (6, 6') begrenzten quaderähnlichen Stauraums des Rollgestells (2) verbindbar sind.

10. Wagen nach einem der vorangehenden Ansprüche, **dadurch gekennzeichnet, dass** die Plane (9) einen vorzugsweise vollständig umlaufenden verstärkten Randbereich (20) umfasst.

11. Wagen nach einem der vorangehenden Ansprüche, **dadurch gekennzeichnet, dass** die Plane (9) wenigstens ein zumindest teilweise umlaufendes Spannmittel umfasst.

12. Wagen nach einem der vorangehenden Ansprüche, **dadurch gekennzeichnet, dass** die Plane (9) wenigstens ein vorzugsweise als Tasche ausgebildetes Aufnahmemittel (16) umfasst.

13. Wagen nach einem der vorangehenden Ansprüche, **dadurch gekennzeichnet, dass** die Plane (9) wenigstens einen durchsichtigen Fensterausschnitt (17) umfasst.

14. Wagen nach einem der vorangehenden Ansprüche, **dadurch gekennzeichnet, dass** die Plane (9) wenigstens eine Aussparung (27), vorzugsweise zwei Aussparungen (27, 27'), insbesondere drei oder vier Aussparungen (27, 27', 27", 27"') umfasst, welche wenigstens einen Längsholm (13), vorzugsweise zwei Längsholme (13, 13'), insbesondere drei oder vier Längsholme (13, 13', 13", 13"') zur Betätigung als Schiebe- bzw. Ziehgriff zugänglich machen.

15. Wagen nach einem der vorangehenden Ansprüche, **dadurch gekennzeichnet, dass** die Plane (9) zur Anbringung wenigstens eines Befestigungsmittels, vorzugsweise zwei oder vier Befestigungsmittel, an dem Wagen (1), im Bereich wenigstens eines Längsholmes (13), vorzugsweise an zwei Längsholmen (13, 13') oder an vier Längsholmen (13, 13', 13", 13"') angeordnete(n) Schlitz(e) oder dergleichen Öffnung(en) (28, 28', 28", 28"'), insbesondere Aussparung(en) umfasst.

16. Abdeckmittel (3) zum Ummanteln eines Rollgestells (2), insbesondere eines Wagens (1) nach einem der vorhergehenden Ansprüche,
**dadurch gekennzeichnet, dass**
das Abdeckmittel (3) als umlaufende, einstückige Plane (9) ausgebildet ist und Verschlussmittel (10, 10', 10", 10"') zum Verschließen der Plane (9) und Hängemittel (11, 11') zum Aufhängen der Plane (9) an dem Wagen (1) umfasst.
